(19) Europäisches Patentamt
European Patent Office
Office européen des brevets

(11) Publication number: **0 014 947**
**B1**

(12) **EUROPEAN PATENT SPECIFICATION**

(45) Date of publication of patent specification: **18.09.85**

(51) Int. Cl.$^4$: **C 08 F 297/04**

(21) Application number: **80100713.9**

(22) Date of filing: **13.02.80**

(54) **Block copolymers of diene having their terminal end blocks of a random copolymer of styrene or alkylstyrene and an alpha-methylstyrene, and their preparation.**

(30) Priority: **15.02.79 US 12539**
**19.11.79 US 95696**

(43) Date of publication of application:
**03.09.80 Bulletin 80/18**

(45) Publication of the grant of the patent:
**18.09.85 Bulletin 85/38**

(84) Designated Contracting States:
**BE DE FR GB IT NL SE**

(56) References cited:
**DE-A-2 015 249**

(73) Proprietor: **THE DOW CHEMICAL COMPANY**
**2030 Dow Center Abbott Road P.O. Box 1967**
**Midland, MI 48640 (US)**

(72) Inventor: **Tung, Lu Ho**
**401 Hunters Ridge**
**Midland, Michigan (US)**
Inventor: **Lo, Grace Y-S**
**1032 Scott Street**
**Midland, Michigan (US)**

(74) Representative: **Hann, Michael, Dr.**
**Marburger Strasse 38**
**D-6300 Giessen (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 014 947 B1

**Description**

Block copolymers of the configuration $AB(BA)_n$ wherein n is 1, 2, or 3, A is a random copolymer of an alkenyl aromatic monomer and α-methylstyrene, and B is a block of a polymer of one or more conjugated dienes, or certain block copolymers, for example, certain block copolymers of the structure polystyrene - polyisoprene - polystyrene and polystyrene - polybutadiene - polystyrene, are reversibly plastifiable and have at ambient temperature without being vulcanized elastomeric properties including strength properties, comparable to those of conventional vulcanizates. They are also good impact plastics if the polydiene content is kept low.

The known block copolymers, however, exhibit relatively poor low temperature or high temperature performance. For example, the block copolymers of DE—A—2015 249 or equivalent GB—A—1 264 741 having terminal polymer blocks of styrene and α-methylstyrene show improved high temperature performance in comparison with those with terminal polymer blocks of styrene, but their polydiene center block has a high 1,2-vinyl structure contributing to poor low temperature properties.

Thus, it would be desirable to have an improved block copolymer with a relatively high heat distortion temperature and good low temperature properties, particularly as a medium impact resin having a high degree of transparency, or as an improved thermoplastic elastomer or soft thermoplastic resin.

These benefits are achieved in a block copolymer, having the linear or branched configuration $AB(BA)_n$ wherein A is a random copolymer of an alkenyl aromatic monomer and an α-methylstyrene, and B is a polymer of 1,3-butadiene having polymerized therein from 0 to 10 weight percent of a monovinyl aromatic compound; and n is 1, 2 or 3, said block copolymer being characterized in that the copolymer composition contains 2 to 98 weight percent of the block copolymer A having a mole ratio of alkenyl aromatic monomer to α-methylstyrene in A of from 1 to 0.5 to 1 to 2.5, and 98 to 2 weight percent of the 1,3-butadiene polymer B having not more than 25 mole percent 1,2-vinyl groups and a glass transition temperature not higher than −75 degrees C.

Also within the scope of the present invention is a method for the preparation of a block copolymer having the linear or branched configuration $AB(BA)_n$ wherein A is random copolymer of an alkenyl aromatic monomer and an alpha-methyl styrene, B is a diene polymer of 1,3-butadiene, isoprene or mixtures thereof having polymerized therein from 0 to 10 weight percent of a monovinyl aromatic compound, said copolymer composition containing from 2 to 98 weight percent of the blocked copolymer A having a mole ratio of alkenyl aromatic monomer to alpha-methyl styrene in A from 1 to 0.5 to 1 to 2.5 and 98 to 2 weight percent of the diene polymer B having not more than 25 mole percent 1,2-vinyl groups, said method comprising

(1) polymerizing the diene monomer in a hydrocarbon solvent, and optionally in the presence of the alpha-methyl styrene monomer, employing a multifunctional lithium polymerization initiator in the absence of oxygen and moisture at a temperature of from 40°C to 120°C to provide a living diene polymer block of desired molecular weight dissolved in the hydrocarbon solvent,

(2) adding a polar solvent to the hydrocarbon solvent containing the living diene polymer and, if present, the alpha-methyl styrene monomer,

(3) adding the alpha-methyl styrene monomer if not already present and then

(4) adding continuously the alkenyl aromatic monomer at a rate whereby a random alkenyl aromatic monomer/alpha-methyl styrene monomer block is polymerized and chemically attached to the polydiene block.

By the term alkenyl aromatic monomer is meant a monomer of the formula:

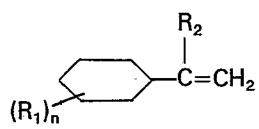

where n is an integer from 0 to 3, $R_1$ is an alkyl radical containing up to 5 carbon atoms and $R_2$ is hydrogen. Preferred alkenyl aromatic monomers include styrene, vinyltoluene, and particularly para-vinyltoluene.

By the term α-methylstyrene is meant a compound of the above formula wherein $R_1$ is an alkyl radical containing up to 5 carbon atoms and $R_2$ is methyl.

The resultant block copolymers may be elastomeric or resinous depending upon the portions of the ingredients selected. One type of preferred polymers with low portions of the diene, i.e. 2 to 40 weight percent polydiene, are generally resinous, transparent, and particularly suited for packaging applications where both low temperatures and high temperatures are encountered such as frozen foods to be heated prior to serving. Another type of preferred polymers with higher proportions of the polydiene block, i.e. 55 to 98 weight percent polydiene, are desirable thermoplastic elastomers having a relatively high service temperature plus desirable low temperature characteristics. Polymers containing about 40 to 55 weight percent diene are generally considered soft plastics.

The molecular weight of the block copolymer in accordance with the present invention as determined by gel permeation chromatography will vary from about 5,000 to 500,000 molecular weight units.

Particularly desirable polymers for most applications have a molecular weight range from about 80,000 to 300,000 molecular weight units.

The term "random" employed in defining the copolymer A is not used to mean that the two monomers in the copolymer are alternating in a one-to-one manner or conform strictly to random statistics. Rather, it means that extensive block-like structures of polymerized alkenyl aromatic monomer or a polymerized α-methylstyrene monomer do not exist.

The polymer blocks B of the block copolymers $AB(BA)_n$ according to the invention are elastomeric polymer blocks of 1,3-butadiene having polymerized therein from 0 to 10 weight percent of a monovinyl aromatic compound. It is essential to the present invention, that the 1,2-vinyl butadiene block be not greater than 25 percent, the 1,2-vinyl content being computed from the infrared spectrum by the method of P. Morero et al., Chim. Ind. Milan, *41*, 758 (1959), and the glass transition temperature (Tg) of these polydienes be not greater than about −75°C as determined by a Perkin-Elmer differential scanning calorimeter, Model DSC2, when a sample is heated at a rate of 20°C per minute.

The polymer blocks of the blocked copolymers $AB(BA)_n$ obtained by the method of the invention are elastomeric polymer blocks of 1,3-butadiene, isoprene or mixtures thereof having polymerized therein from 0 to 10 weight percent of a monovinyl aromatic compound. It is essential for the block copolymers obtained by the method of the invention that the 1,2-vinyl polydiene microstructure content of the polydiene block is not greater than 25 percent, the 1,2-vinyl content being computed by the method stated before.

Block copolymers of the present invention may be of the linear ABA configuration or the branched configuration such as $AB(BA)_n$. In the preparation of a linear polymer such as of the ABA configuration, a difunctional lithium catalyst is employed. In the preparation of the simplest branched polymer having the structure $AB(BA)_n$, a trifunctional lithium polymerization initiator is employed. Multifunctional lithium catalysts and their use in the polymerization of olefinically unsaturated hydrocarbon monomers are well-known. Such polymers and initiators are disclosed in U.S. Patents: 3,660,536; 3,663,634; 3,668,263; 3,684,780; 3,725,368; 2,734,973; 3,776,893; 3,776,964; 3,784,637; 3,787,510; and 3,954,894, for example. Very desirable lithium initiators can be prepared by the addition of two moles of an organolithium compound, such as a butyl lithium, to one mole of a compound containing two 1,1-diphenylethylene groups.

The invention is illustrated by the following examples. All parts are by weight unless otherwise specified. 1,2-Vinyl content was computed from the infrared spectrum (IR) by the method of Morero et al.; the glass transition temperature with a Perkin-Elmer differential scanning calorimeter (DSC) at a heating rate of 20°C per minute. All polymerizations were conducted in a dry nitrogen atmosphere.

Example 1

A. A dilithium initiator was prepared by mixing 4.1 milliliters of cyclohexane containing 2.25 millimoles of secondary butyllithium with 18 milliliters of toluene containing 1.15 millimoles of 1,3-di(1-phenylethylene)benzene. The resulting dark red mixture was held at 25°—30°C for 2.5 hours.

B. An ABA block copolymer was prepared by charging a one-liter flask with 350 milliliters of cyclohexane, 30 grams of 1,3-butadiene and 55 milliliters of α-methylstyrene. The resultant mixture was treated with 0.25 millimole of secondary butyllithium to inactivate any moisture, oxygen or active hydrogen compounds which would interfere with the dilithium initiator. The previously prepared initiator was added with a syringe and the flask immersed in a water bath held at about 50° to 60°C for 130 minutes. Then 2 milliliters of styrene were added, the water bath temperature lowered to 20°C, and 40 milliliters of tetrahydrofuran was added to the flask. On addition of the tetrahydrofuran, the solution in the flask changed from yellow to a reddish brown color. Finally, 32 milliliters of styrene was added to the reaction mixture at a steady rate over three hours while maintaining the water bath temperature at about 20°C. About 5 minutes after the completion of the styrene addition, 4 milliliters of methanol were added to inactivate the living polymer.

The block copolymer was recovered by precipitation with methanol and weighed 102 grams after drying in a vacuum oven. Its molecular weight was 99,000 molecular weight units as determined by gel permeation chromatography. The polymer contained 29 weight percent butadiene and had a styrene to α-methylstyrene mole ratio of 1:1.2. 82 Weight percent of the α-methylstyrene was polymerized. The styrene and butadiene were polymerized quantitatively. A portion of the copolymer was compression molded and the following physical properties determined:

| | |
|---|---|
| Tensile Yield | 4100 psi (288 $kg/cm^2$) |
| Elongation | 14 percent |
| Modulus$\times 10^5$ | 2.80 psi (0.20 $kg/cm^2$) |
| Izod Impact | 0.58 ft lb/in (0.31 joule/cm) |
| Clarity | 0.008 l/mils |
| Vicat Softening | 120°C |

Example 2—7

In Examples 2 to 7, the procedure of Example 1 was repeated with the exception that feed compositions were altered to provide block copolymers of various composition. Table I sets forth the reactant materials; Table II, the end-block polymerization conditions; Table III, the physical properties of the high heat distortion transparent impact copolymer; and Table IV, the composition and properties of the thermoplastic elastomers. In Tables I through IV, the following abbreviations are employed:

| | |
|---|---|
| m-mole millimole | αMS alpha-methylstyrene |
| g grams | psi pounds per square inch |
| ml milliliter | ft foot |
| wt weight | lb pound |
| S styrene | in inch |

TABLE I
Materials used in Examples 2 to 7

| | Dilithium initiator* | | Monomers | | | Solvents | |
|---|---|---|---|---|---|---|---|
| Example number | 1,3-PEB (m-mole) | S-BuLi (m-mole) | Butadiene (g) | α-Methylstyrene (ml) | Styrene (ml) | Cyclohexane (ml) | THF (ml) |
| 2 | 1.15 | 2.25 | 30 | 75 | 18 | 360 | 40 |
| 3 | 1.16 | 2.28 | 30 | 40 | 48 | 370 | 32 |
| 4 | 1.16 | 2.28 | 43 | 51 | 30 | 350 | 40 |
| 5 | 0.84 | 1.67 | 21 | 65 | 40 | 360 | 40 |
| 6 | 0.64 | 1.26 | 33 | 25 | 11 | 360 | 40 |
| 7 | 1.86 | 3.69 | 110 | 42 | 19 | 900 | 100 |

*1,3-PEB=1,3-di(1-Phenylethyl)benzene
S-Buli=Secondary Butyllithium

TABLE II
The end blocks polymerization conditions

| Example number | End blocks polymer temp. °C | Styrene addition time min. | Wt. of copolymer g | % Alpha-methylstyrene polymerized |
|---|---|---|---|---|
| 2 | 30 | 180 | 93 | 68 |
| 3 | 31 | 135 | 103 | 80 |
| 4 | 26 | 185 | 111 | 87 |
| 5 | 26 | 170 | 107 | 86 |
| 6 | 20 | 170 | 57 | 60 |
| 7 | 26 | 175 | 155 | 74 |

TABLE III

Composition and properties of high heat distortion transparent impact copolymers from examples 2 to 5

| Example number | Mol. wt. $\times 10^{-3}$ | Butadiene wt. % | Mole ratio S/αMS | Tensile yield psi ($kg/cm^2$) | % elongation | Modulus $\times 10^5$ psi ($kg/cm^2$) | Izod impact ft-lb/in (joule/cm) | Vicat softening °C |
|---|---|---|---|---|---|---|---|---|
| 2 | 102 | 32 | 1:2.5 | 3430 (241) | 11.7 | 1.85 (0.130) | 0.76 (0.40) | 128 |
| 3 | 92 | 29 | 1:0.6 | 3500 (246) | 13.7 | 1.89 (0.132) | 0.61 (0.32) | 102 |
| 4 | 112 | 39 | 1:1.3 | 2470 (173) | >350 | 1.25 (0.088) | 1.39 (0.74) | 120 |
| 5 | 162 | 20 | 1:1.3 | 4330 (304) | 4.3 | 2.83 (0.199) | 0.61 (0.32) | 118 |

TABLE IV

Composition and properties of high service temperature thermoplastic elastomers from examples 6 and 7

| Example number | Mo. wt. $\times 10^{-3}$ | Butadiene wt. % | Mole ratio S/MS | Tensile rupture psi (kg/cm$^2$) | % Elongation |
|---|---|---|---|---|---|
| 6 | 112 | 58 | 1:1.2 | 3970 (279) | 775 |
| 7 | 93 | 71 | 1:1.5 | 3930 (276) | 925 |

Example 8 (Comparative)

For purposes of comparison, 5 polybutadiene homopolymers were prepared employing the adduct of 1,3-di(1-phenylethenyl)benzene and secondary butyllithium with cyclohexane as a solvent.

Run 1: The dilithium initiator was prepared by the procedure of Example 1 except that 1.32 millimoles of secondary butyllithium was employed with 0.66 millimole of 1,3-di(1-phenylethenyl)benzene. A 1-liter polymerization flask was charged with 420 milliliters of cyclohexane and 38 grams of butadiene, 0.09 millimoles of secondary butyllithium was added to remove moisture, oxygen and other impurities and the dilithium initiator was injected. Polymerization proceeded for three hours while heating in a water bath at 45° to 60°C. After three hours, 3 milliliters of methanol were added to terminate the living polymer and the polymer precipitated with methanol and dried.

Run 2 repeated Run 1 except that 50 milliliters of α-methylstyrene was added as part of the polymerization solvent. (Under these conditions α-methylstyrene is not incorporated into the polymer).

Run 3 repeated Run 1 except that 380 milliliters of cyclohexane and 1/2 milliliter of tetrahydrofuran were employed as the polymerization solvent.

Run 4 repeated Run 1 except that 1 milliliter of tetrahydrofuran was added to the cyclohexane as polymerization solvent.

Run 5 repeated Run 1 except that 380 milliliters of cyclohexane and 1.8 milliliters of tetrahydrofuran were used as the polymerization solvent.

Polymers from these runs were analyzed for 1,2-vinyl content, Cis- and Trans- content and glass transition temperature ($T_g$). The results are set forth in Table V.

TABLE V

Microstructure and $T_g$ of polybutadienes by IR and DSC

| Run # | 1,2-% | Trans 1,4-% | Cis 1,4-% | $T_g$ (°C) |
|---|---|---|---|---|
| 1 | 9.0 | 54.7 | 36.3 | −95 |
| 2 | 9.9 | 53.6 | 36.5 | −96 |
| 3 | 38.2 | 36.7 | 25.1 | −75 |
| 4 | 44.1 | 33.2 | 22.7 | −71 |
| 5 | 57.1 | 24.9 | 18.0 | −60 |

Example 9 (Comparative)

Preparation of styrene/α-methylstyrene/butadiene ABA polymer. The procedure of Example 7 was repeated except that 0.95 milliliters of tetrahydrofuran was added prior to the butadiene polymerization and the α-methylstyrene was added at the end of the butadiene polymerization. The materials employed were as follows:

| | | |
|---|---|---|
| Dilithium initiator | | |
| 1,3-di(1-phenylethenyl)benzene | 0.67 m mole | |
| Secondary butyllithium | 1.33 m mole | |
| Polymerization solvent | | |
| Cyclohexane | 380 ml | During butadiene polymerization |
| THF | 0.95 ml | |
| THF | 41 ml | After butadiene polymerization complete |
| Monomers | | |
| Butadiene | 38 g | |
| α-Methylstyrene | 16 ml | |
| Styrene | 6.5 ml | |

The resultant copolymer contained 72 weight percent butadiene with 45 mole percent 1,2-vinyl in polybutadiene microstructure and had a styrene to α-methylstyrene mole ratio of 1:1.3. The glass transition temperatures ($T_g$) of the polybutadiene centre block (with 45 percent 1,2-content) of this copolymer and the copolymer prepared in Example 7 (with 10 percent 1,2-content) were determined by DSC.

| Sample | 1,2 Content of PBD center block | $T_g$ of polybutadiene center block °C |
|---|---|---|
| Example 7 | 10% | −94 |
| Example 9 | 45% | −69 |

These values agree with the $T_g$-microstructure relationship of pure polybutadiene homopolymers prepared in Example 8.

Example 10

Preparation of ABA isoprene block copolymer. A dilithium initiator was prepared by mixing 2.5 milliliters of a solution of 1.44 millimoles of secondary butyllithium in cyclohexane and 15 milliliters of a toluene solution of 0.71 millimoles of 1,3-di(1-phenylethenyl)benzene. The resultant dark red solution was maintained at about 25° to 30°C for twenty hours. Then 1 milliliter of isoprene was added and the mixture heated at 60° to 70°C for 7 minutes to provide the polymerization initiating solution.

A one-liter flask was charged with 370 ml of cyclohexane, 49 ml of isoprene and 15 ml of α-methylstyrene, 0.17 millimole of secondary butyllithium added to remove moisture, oxygen and other harmful impurities, and the dilithium initiator solution injected. The polymerization temperature was held between 40° and 60°C. After 70 minutes, 0.5 milliliter of styrene was added, the temperature of the water bath lowered to about 25°C and 40 milliliters of tetrahydrofuran was added changing the color of the polymerization mixture from yellow to a reddish brown color. An additional 6 milliliters of styrene was continuously added to the polymerization mixture over 160 minutes while maintaining a temperature of about 26°C. About 5 minutes after the completion of the styrene addition, 3 milliliters of methanol was added and the polymer was recovered by precipitation with methanol. The polymer weighed 47.5 grams after drying. The molecular weight of the copolymer was 129,000 molecular weight units as determined by gel permeation chromatography. The copolymer was calculated to contain 72 weight percent isoprene and the styrene to α-methylstyrene mole rate was 1:1:1. 55 weight percent of the α-methylstyrene was polymerized. The styrene and isoprene were polymerzed quantitatively. The dried block ABA copolymer was compression molded and tested with the following results.

| | |
|---|---|
| Tensile strength at rupture | 3900 psi (274 kg/cm$^2$) |
| Elongation | 1325 percent |

Example 11

The procedure of Example 1 was employed to prepare a triblock copolymer of the structure: (vinyltoluene/α-methylstyrene)-butadiene-(vinyltoluene/α-methylstyrene). The materials and conditions which differ from Example 1 are as follows:

The dilithium initiator is the addition product of 0.70 millimoles of 1,3-bis[1-(4-methyl)ethenyl]benzene and 1.39 millimoles of secondary butyllithium, 44 grams of butadiene, 16.8 milliliters of α-methylstyrene, 8.2 milliliters of vinyltoluene which contained about 33 weight percent of the para isomer and 67 weight percent of the meta isomer. 360 Milliliters of cyclohexane was used and 40 milliliters of tetrahydrofuran. The end blocks were polymerized at 30°C; the vinyltoluene added over a period of 160 minutes. 59 Grams of copolymer were obtained and 53 weight percent of the α-methylstyrene had polymerized. The triblock polymer had a molecular weight of 116,000 mole weight units, the polymer contained 74 weight percent butadiene. The mole ratio of vinyltoluene to α-methylstyrene was 1:1.1. The triblock polymer had a tensile strength at rupture of 3400 psi (239 kg/cm$^2$) and an elongation of 975 percent.

Polymers in accordance with the present invention exhibit a substantially improved service temperature when compared to block copolymers having polystyrene terminal blocks. They are readily heat fabricated by extrusion or injection molding and do not exhibit undesired thermal degradation observed when a polymer is used which has terminal blocks of poly-α-methylstyrene. Polymers of the present invention are readily polymerized at ambient temperatures, whereas polymers having poly-α-methylstyrene terminal blocks must be polymerized at temperatures such as −20° to −70°C.

**Claims**

1. A block copolymer having the linear or branched configuration:

$$AB(BA)_n$$

wherein

A is a random copolymer of an alkenyl aromatic monomer and an α-methylstyrene;

B is a polymer of 1,3-butadiene having polymerized therein from 0 to 10 weight percent of a monovinyl aromatic compound; and

n is 1, 2 or 3

characterized in that the copolymer composition contains 2 to 98 weight percent of the block copolymer A having a mole ratio of alkenyl aromatic monomer to α-methylstyrene in A of from 1 to 0.5 to 1 to 2.5 and 98 to 2 weight percent of the polymer of B of 1,3-butadiene having not more than 25 mole percent 1,2-vinyl groups and a glass transition temperature not higher than −75°C.

2. The block copolymer of claim 1 wherein the content of the polymer of 1,3-butadiene is from 10 to 40 weight percent.

3. The block copolymer of claim 1 wherein the content of the polymer of 1,3-butadiene is from 55 to 90 weight percent.

4. The block copolymer of claim 1 wherein the molecular weight is from 5,000 to 500,000 molecular weight units.

5. The block copolymer of claim 1 wherein n is 1 and the monovinyl aromatic monomer is styrene.

6. A method for the preparation of a block copolymer having the linear or branched configuration

$$AB(BA)_n$$

wherein

A is a random copolymer of an alkenyl aromatic monomer and an α-methylstyrene;

B is a diene polymer of 1,3-butadiene, isoprene or mixtures thereof having polymerized therein from 0 to 10 weight percent of a monovinyl aromatic compound; and

n is 1, 2 or 3,

said copolymer composition containing from 2 to 98 weight percent of the block copolymer A having a mole ratio of an alkenyl aromatic monomer to α-methylstyrene in A of from 1 to 0.5 to 1 to 2.5 and 98 to 2 weight percent of the diene polymer B having not more than 25 mole percent 1,2-vinyl groups, said method comprising

(1) polymerizing the diene monomer in a hydrocarbon solvent, and optionally in the presence of the α-methylstyrene monomer, employing a multifunctional lithium polymerization initiator in the absence of oxygen and moisture at a temperature of from 40° to 120°C. to provide a living diene polymer block of desired molecular weight dissolved in the hydrocarbon solvent,

(2) adding a polar solvent to the hydrocarbon solvent containing the living diene polymer and, if present, the α-methylstyrene monomer,

(3) adding the α-methylstyrene monomer if not already present and then

(4) adding continuously the alkenyl aromatic monomer at a rate whereby a random alkenyl aromatic monomer/α-methylstyrene monomer block is polymerized and chemically attached to the polydiene block.

7. The method of claim 6 wherein n is 1, the alkenyl aromatic monomer is styrene and the molecular weight of the block copolymer is 5,000 to 500,000 molecular weight units.

**Patentansprüche**

1. Blockcopolymer mit linearer oder verzweigter Struktur:

$$AB(BA)_n$$

wobei

A ein statistisches Copolymer eines alkenylaromatischen Monomers und einem α-Methylstyrol, B ein Polymer von 1,3-Butadien mit 0—10 Gew.% einpolymerisierter monovinylaromatischer Komponente und *n* 1,2 oder 3 ist, dadurch gekennzeichnet, daß die Copolymerzusammensetzung 2 bis 98 Gew.% des Blockcopolymer A mit einem Molverhältnis alkenylaromatisches Monomer: α-Methylstyrol von 1:0,5 bis 1:2,5 und 98 bis 2 Gew.% des 1,3-Butadienpolymer B mit nicht mehr als 25 Mol% 1,2-Vinylgruppen und einer Glasumwandlungstemperatur nicht höher als minus 75°C enthält.

2. Blockcopolymer nach Anspruch 1, dadurch gekennzeichnet, daß der Gehalt des 1,3-Butadienpolymer von 10 bis 40 Gew.% beträgt.

3. Blockcopolymer nach Anspruch 1, dadurch gekennzeichnet, daß der Gehalt des 1,3-Butadienpolymer von 55 bis 90 Gew.% beträgt.

4. Blockcopolymer nach Anspruch 1, dadurch gekennzeichnet, daß das Molekulargewicht von 5000 bis 500 000 Molekulargewichtseinheiten beträgt.

5. Blockcopolymer nach Anspruch 1, dadurch gekennzeichnet, daß *n* 1 und das monovinylaromatische Monomer Styrol ist.

6. Verfahren zum Herstellen eines Blockcopolymer mit linearer oder verzweigter Struktur:

$$AB(BA)_n$$

wobei A ein statistisches Copolymer eines alkenylaromatischen Monomers und einem α-Methylstyrol, B ein Polymer von 1,3-Butadien, Isopren oder Mischungen derselben mit 0 bis 10 Gew.% einpolymerisierter monovinylaromatischer Komponente und *n* 1, 2 oder 3 ist, die Copolymerzusammensetzung 2 bis 98 Gew.% des Blockcopolymer A mit einem Molverhältnis von alkenylaromatischem Monomer: α-Methylstyrol in A von 1:0,5 bis 1:2,5 und 98 bis 2 Gew.% des Dienpolymer B mit nicht mehr als 25 Mol% 1,2-Vinylgruppen enthält, gekennzeichnet durch

(1) Polymerisieren des Dienmonomer in einem Kohlenwasserstofflösungsmittel und gegebenenfalls in Gegenwart des α-Styrolmonomeren unter Verwendung eines Multifunktionalen Lithium-Polymerisationsstarters in Abwesenheit von Sauerstoff und Feuchtigkeit bei einer Temperatur von 40° bis 120°C, um ein frisches Dienblockpolymer des gewünschten Molekulargewichts gelöst in dem Kohlenwasserstofflösungsmittel zu erhalten,

(2) Hinzufüngen eines polaren Lösungsmittels zum frischen Dienblockpolymer und gegebenenfalls α-Methylstyrol enthaltenden Kohlenwasserstofflösungsmittel,

(3) Hinzufügen des α-Methylstyrolmonomer, sofern dieses nicht bereits anwesend ist,

(4) kontinuierliches Hinzufügen des alkenylaromatischen Monomer mit einer Geschwindigkeit, bei der ein statistischer alkenylaromatischer Monomer/α-Methylstyrolmonomer-Block polymerisiert und chemisch an den Polydienblock gebunden wird.

7. Verfahren nach Anspruch 6, dadurch gekennzeichnet, daß *n* 1, das alkenylaromatische Monomerstyrol ist und das Molekulargewicht des Blockcopolymeren 5000 bis 500 000 Molekulargewichtseinheiten aufweist.

**Revendications**

1. Copolymère séquencé à structure linéaire ou ramifiée:

$$AB(BA)_n$$

dans laquelle

A est un copolymère statistique d'un monomère alcényle aromatique et d'α-méthylstyrène; B est un polymère de 1,3-butadiène dans lequel est polymérisé de 0 à 10% en poids d'un composé monovinylique aromatique; et *n* est 1, 2 ou 3, caractérisé en ce que la composition du copolymère comporte 2 à 98% en poids du copolymère séquencé A ayant un rapport molaire du monomère alcényle aromatique à l'α-méthylstyrée da A de 1:0,5 à 1:2,5, et 98 à 2% en poids du polymère B de 1,3-butadiène ne contenant pas plus de 25% en mole de groupes 1,2-vinyliques et ayant une température de transition vitreuse qui n'es pas supérieure à −75°C.

2. Copolymère séquencé selon la revendication 1, dans lequel la teneur en polymère de 1,3-butadiène est de 10 à 40% en poids.

3. Copolymère séquencé selon la revendication 1, dans lequel la teneur en polymère de 1,3-butadiène est de 55 à 90% en poids.

4. Copolymère séquencé selon la revendication 1, dans lequel le poids moléculaire est de 5.000 à 500.000 unités de poids moléculaire.

5. Copolymère séquencé selon la revendication 1, dans lequel *n* est 1 et le monomère monovinylique aromatique est le styrène.

6. Procédé de préparation d'un copolymère séquencé de configuration linéaire ou ramifiée

$$AB(BA)_n$$

dans laquelle

A est un copolymère statistique d'un monomère alcényle aromatique et d'un α-méthylstyrène; B est un polymère diénique de 1,3-butadiène, d'isoprène ou des mélanges de ceux-ci contenant 0 à 10% en poids d'un composé monovinylique aromatique polymérisé, et *n* est 1, 2 ou 3, ladite composition de copolymère contenant de 2 à 98% en poids du copolymère séquencé A présentant un rapport molaire du monomère alcényle aromatique à l'α-méthylstyrène dans A de 1:0,5 à 1:2,5, et 98 à 2% en poids du polymère diénique B ne contenant pas plus de 25% en mole de groupes 1,2-vinyle, procédé qui consiste:

(1) à polymériser le monomère diénique dans un solvant hydrocarboné et facultativement en présence du monomère α-méthylstyrène, en utilisant un initiateur de polymérisation au lithium multifonctionnel en l'absence d'oxygène et d'humidité à une température de 40 à 120°C pour obtenir une séquence de polymère diénique vivant de poids moléculaire désiré en solution dans le solvant hydrocarboné,

(2) à ajouter un solvant polaire au solvant hydrocarboné contenant le polymère diénique vivant et, s'il est présent, le monomère α-méthylstyrène,

(3) à ajouter le monomère α-méthylstyrène, s'il n'est pas déjà présent, puis

(4) à ajouter en continu le monomère alcényle aromatique à un taux tel que la séquence statistique de monomère alcényle aromatique/monomère α-méthylstyréne soit polymérisée et chimiquement liée à la séquence de polydiène.

7. Procédé selon la revendication 6, dans lequel *n* est 1, le monomère alcényle aromatique est le styrène et le poids moléculaire du copolymère séquence est de 5.000 à 500.000 unités de poids moléculaire.